# FASCICULE DE BREVET EUROPEEN

(11) **EP 0 707 424 B1**
(45) Date de publication et mention de la délivrance du brevet: **22.03.2000**
(21) Numéro de dépôt: 95401708.3
(22) Date de dépôt: 18.07.1995
(51) Int. Cl.: H04N 7/18

(54) **Procédé pour améliorer la vision de nuit du conducteur d'un véhicule automobile et dispositif pour la mise en oeuvre d'un tel procédé**
Verfahren und Vorrichtung für Nachsichtverbesserung für Autofahrer
Method and apparatus for improved night vision of a motorist

(30) Priorité: 11.10.1994 FR 9412124
(43) Date de publication de la demande: 17.04.1996
(73) Titulaire: AUTOMOBILES PEUGEOT, 75116 Paris (FR); AUTOMOBILES CITROEN, 92200 Neuilly-sur-Seine (FR)
(72) Inventeur: Brame, Jean-Luc, F-75014 Paris (FR)
(74) Mandataire: Thinat, Michel

(56) Documents cités:
- EP-A- 0 238 340
- EP-A- 0 490 029
- DE-A- 4 015 927
- DE-A- 4 032 927
- PATENT ABSTRACTS OF JAPAN vol. 18 no. 274 (M-1611) ,25 Mai 1994 & JP-A-60 048247 (FUJITSU LTD) 22 Février 1994,
- STAHL, KONRAD 'Infrarottechnik', 31 Décembre 1986, HÜTHIG, HEIDELBERG

## Description

La présente invention concerne un procédé pour améliorer la vision de nuit du conducteur d'un véhicule automobile, ainsi que le dispositif pour mettre en oeuvre ce procédé.

On connaît un tel dispositif du type comprenant un émetteur de rayonnement invisible, par exemple du type infrarouge, embarqué sur le véhicule automobile de manière à éclairer le paysage en avant de celui-ci et une caméra également embarquée sur le véhicule, sensible au rayonnement de l'émetteur et destinée à prendre une image du paysage pour la visualiser sur un écran dans le véhicule. Ce dispositif permet ainsi d'éclairer un paysage la nuit avec l'émetteur de rayonnement invisible sans gêner un conducteur d'un véhicule venant en sens inverse. Un tel dispositif est décrit dans EP-A-0 490 029.

Cependant, lorsque le conducteur du véhicule croise l'autre véhicule venant en sens inverse, il commande l'éclairage de son véhicule pour le faire passer en feux de croisement de sorte que ce conducteur voit sa visibilité se réduire de 80-100 mètres à 25-35 mètres. De plus, même lorsque l'autre véhicule arrivant en sens inverse est en feux de croisement, la lumière émise par les feux éblouissent notablement la caméra de sorte que celle-ci se trouve dans l'impossibilité de fournir à l'écran de visualisation une image totalement exploitable par le conducteur en vue d'améliorer la vision de nuit.

La présente invention comme définie dans les revendications 1 et 9 a pour but d'éliminer l'inconvénient ci-dessus du dispositif connu en proposant un procédé et un dispositif permettant de conserver une bonne visibilité de nuit du conducteur d'un véhicule automobile, d'au moins 80 mètres, tout en éliminant l'effet d'éblouissement sus-mentionné.

A cet effet, le procédé de l'invention destiné à améliorer la vision de nuit du conducteur d'un véhicule automobile, comprenant les étapes consistant à éclairer le paysage en avant du véhicule avec un rayonnement invisible et prendre une image de ce paysage avec une caméra sensible à ce rayonnement et adressable ligne par ligne, est caractérisé en ce qu'il comprend en outre les étapes consistant à disposer la caméra de sorte que chacune de ses lignes soit entièrement comprise dans une zone de l'image pour laquelle un gain uniforme est souhaité et à régler le gain de chaque ligne selon des critères prédéterminés pour obtenir la dynamique souhaitée de l'image.

De préférence, la caméra est placée de sorte que ses lignes soient sensiblement verticales.

L'étape pour disposer la caméra avec ses lignes sensiblement verticales peut consister à faire pivoter la caméra de 90° autour d'un axe sensiblement horizontal à partir de sa position normale.

Selon une première variante, le gain de chaque ligne est déterminé en fonction du niveau du signal vidéo de la ligne précédente, par exemple en calculant le gain de chaque ligne de façon qu'il soit inversement proportionnel au niveau du signal vidéo.

Selon une autre variante, le gain de chaque ligne d'une image est déterminé en fonction du niveau du signal vidéo de la même ligne de l'image précédente.

Le procédé comprend une étape supplémentaire consistant à redresser l'image.

Lorsque cette image est reçue par un écran de visualisation, le redressement de l'image est obtenu par pivotement de l'écran de visualisation.

L'image peut par ailleurs être redressée en numérisant celle-ci et en la redressant à l'aide d'une mémoire adéquate.

L'invention propose également un dispositif pour la mise en oeuvre du procédé ci-dessus défini, comprenant un émetteur de rayonnement invisible apte à être monté sur le véhicule de manière à éclairer le paysage en avant de celui-ci et une caméra sensible à ce rayonnement destinée à prendre une image de ce paysage et qui est caractérisé en ce qu'il comprend en outre des moyens maintenant la caméra de façon que ses lignes soient sensiblement verticales et un microprocesseur calculant le gain de chaque ligne de l'image et transmettant les gains calculés à la caméra pour l'obtention de la dynamique souhaitée de l'image.

Le dispositif comprend de plus des moyens permettant le pivotement de 90° de la caméra précitée autour d'un axe sensiblement horizontal à partir de sa position normale.

Avantageusement, l'émetteur de rayonnement précité est du type infrarouge.

De préférence, la caméra est du type CCD.

Le dispositif comprend en outre des moyens pour redresser l'image et, selon un mode de réalisation, le redressement de l'image est effectué par des moyens agencés pour faire pivoter l'écran de visualisation de l'image.

Selon un autre mode de réalisation, les moyens pour redresser l'image comprennent un convertisseur analogique-numérique relié à la caméra CCD pour numériser l'image provenant de la caméra ; une mémoire stockant l'image numérisée du convertisseur analogique-numérique sous le contrôle du microprocesseur ; et un contrôleur vidéo commandé par le microprocesseur pour redresser l'image contenue dans la mémoire et la transmettre à l'écran de visualisation par l'intermédiaire d'un convertisseur numérique-analogique.

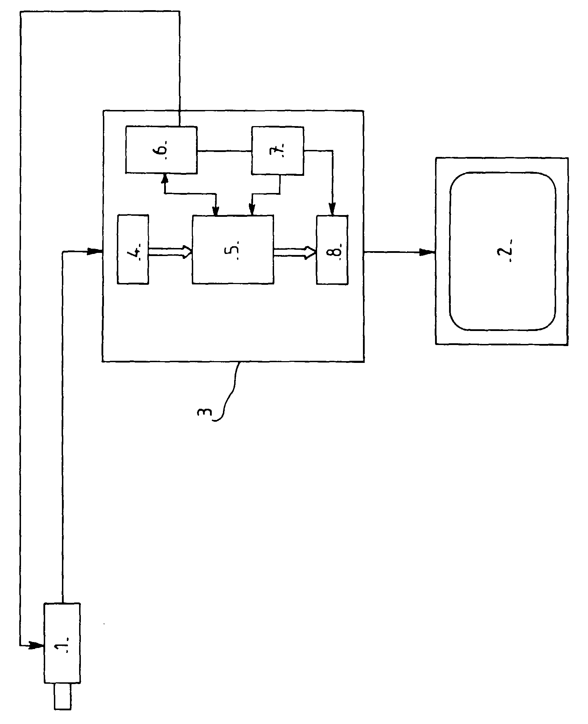

L'invention sera mieux comprise et d'autres buts, caractéristiques, détails et avantages de celle-ci apparaîtront plus clairement dans la description explicative qui va suivre faite en référence au dessin schématique annexé donné uniquement à titre d'exemple illustrant un mode de réalisation du dispositif pour améliorer la vision de nuit du conducteur d'un véhicule automobile.

En se référant à la figure unique, le dispositif pour améliorer la vision de nuit du conducteur d'un véhicule automobile est du type comprenant un émetteur de rayonnement invisible (non représenté) monté sur le véhicule de manière à éclairer la scène ou le paysage en avant de celui-ci sans gêner un conducteur de véhicule automobile venant en sens inverse et une caméra 1 également embarquée sur le véhicule filmant le paysage et fournissant à un écran de visualisation 2, par l'intermédiaire d'une unité de traitement électronique 3, une image vidéo du paysage restituée sur l'écran 2 au conducteur.

Les dispositifs actuels permettant d'accroître la sécurité routière utilisent notamment des émetteurs de rayonnement infrarouge pour éclairer le paysage en combinaison avec des caméras vidéo du type CCD qui, comme cela est bien connu, sont sensibles au rayonnement allant au-delà du spectre du visible, c'est-à-dire entre 0,8 et 1,1 µm, rendant ainsi ces caméras sensibles au rayonnement infrarouge.

Comme mentionné précédemment, lorsqu'un véhicule circulant en sens inverse croise le véhicule équipé du dispositif d'amélioration de la vision de nuit, la lumière émise par le véhicule circulant en sens inverse, même celle provenant des feux de croisement de celui-ci, provoque un éblouissement notable de la caméra 1 de sorte que l'écran de visualisation 2 ne peut pas restituer une image propre et totalement exploitable par le conducteur.

Le dispositif conforme à l'invention permet de traiter le signal de la caméra afin de limiter notablement les effets d'éblouissement sus-mentionnés.

A cet effet, la caméra 1 est disposée de façon que chacune de ses lignes soit entièrement comprise dans une zone de l'image pour laquelle un gain uniforme est souhaité et, de préférence, ces lignes sont sensiblement verticales. De plus, dans le cas où la caméra 1 est du type CCD adressable ligne par ligne, l'unité de traitement 3 est adaptée pour régler le gain de chaque ligne de la caméra 1 selon des critères prédéterminés qui seront définis ultérieurement.

Le principe de l'invention consiste donc à utiliser la caméra tournée d'un quart de tour afin de transformer les lignes en colonnes et vice versa et repose sur le fait que l'éblouissement se situe dans une partie de l'image, par exemple dans le tiers gauche de celle-ci. Dans la mesure où les caméras CCD ne sont adressables que par ligne, il est possible de déterminer et d'affecter un gain par ligne vidéo de sorte que pour chaque ligne vidéo surexposée située dans la zone d'éblouissement de l'image, le gain sera atténué tandis qu'il sera augmenté pour les lignes vidéo comprises dans la zone d'intérêt. Comme l'éblouissement se situe toujours dans la même zone, on peut donc à la fois augmenter au maximum le contraste dans la zone d'intérêt et réduire l'éblouissement dans la zone correspondante.

L'unité de traitement 3 du dispositif permettant le traitement du signal lié à la caméra afin de limiter les effets d'éblouissement de la manière exposée ci-dessus comprend un convertisseur analogique-numérique 4 numérisant l'image provenant de la caméra CCD 1, une mémoire 5, par exemple du type RAM, stockant, sous le contrôle d'un microprocesseur 6, l'image numérisée du convertisseur analogique-numérique 4. L'unité 3 comprend de plus un contrôleur vidéo 7 recevant les ordres du microprocesseur 6 et redressant l'image contenue dans la mémoire 5. En effet, puisque la caméra vidéo CCD est retournée de 90°, l'image vidéo de cette caméra sera elle aussi inversée de sorte qu'il est nécessaire de prévoir le contrôleur vidéo 7 pour qu'il effectue l'opération de redressement de l'image vidéo dans la mémoire 5. Cette opération de redressement introduit alors un retard d'une trame de 20 millisecondes, ce qui n'est toutefois pas du tout pénalisant pour le dispositif de l'invention. Le contrôleur vidéo 7 est également adapté pour transmettre l'image redressée à un convertisseur numérique-analogique 8 qui fournit l'image analogique redressée à l'écran de visualisation 2.

Le microprocesseur 6 est adapté pour analyser l'image vidéo numérisée dans la mémoire 5 et calculer le gain de chaque ligne pour transmettre les gains calculés à la caméra 1. Le réglage du gain de chaque ligne s'effectue par le microprocesseur 6 selon des critères prédéterminés. Ainsi, par exemple, le gain de chaque ligne peut être déterminé en fonction du niveau du signal vidéo de la ligne précédente, par exemple en calculant le gain de chaque ligne de façon qu'il soit inversement proportionnel au niveau du signal vidéo. L'analyse du signal vidéo d'une ligne permet donc de savoir si l'on se trouve dans une zone claire ou sombre de l'image, ce qui permet de régler le gain de la ligne suivante : le décalage n'est donc que d'une ligne dans la zone de transition, ce qui n'est pas gênant. Le microprocesseur 6 peut également être adapté pour déterminer le gain de chaque ligne d'une image en fonction du niveau du signal vidéo de la même ligne de l'image précédente. Le contrôle des gains peut se faire en analysant simplement la valeur maximale et moyenne de chaque ligne et en les comparant à des valeurs identifiées et les algorithmes analogiques d'expansion de contraste de l'image visualisée sont largement connus et n'ont pas à être détaillés.

Diverses modifications peuvent être apportées au procédé d'amélioration de la vision de nuit du conducteur d'un véhicule automobile sans sortir du cadre de la présente invention. Ainsi, l'opération de redressement de l'image de la caméra peut être effectuée tout simplement en changeant d'orientation, par des moyens appropriés connus en soi, l'écran 2 d'une même valeur angulaire que celle de la caméra 1. De plus, la caméra 1 peut être montée sur un axe sensiblement horizontal à une position normale horizontale et des moyens mécaniques, connus en soi, éventuellement commandables à distance, sont prévus pour faire pivoter la caméra d'un quart de tour lors de son utilisation de nuit.

Le dispositif ci-dessus décrit de l'invention ainsi que le procédé qui en découle permettent d'améliorer notablement la vision de nuit du conducteur d'un véhicule automobile sans aucune modification de la caméra utilisée en évitant efficacement les éblouissements provoqués par les feux d'un véhicule circulant en sens inverse.

## Revendications

1. Procédé pour améliorer la vision de nuit du conducteur d'un véhicule automobile, comprenant les étapes suivantes consistant à :
a) éclairer le paysage en avant du véhicule avec un rayonnement invisible ; et
b) prendre une image de ce paysage avec une caméra (1) sensible à ce rayonnement et adressable ligne par ligne, caractérisé en ce qu'il comprend en outre les étapes suivantes consistant à :
c) disposer la caméra (1) de sorte que ses lignes soient sensiblement verticales et que chacune de ses lignes soit entièrement comprise soit dans une zone d'éblouissement de l'image, soit dans la zone d'intérêt de celle-ci, et
d) diminuer le gain de chaque ligne vidéo surexposée située dans la zone d'éblouissement et augmenter le gain pour chaque ligne vidéo comprise dans la zone d'intérêt.

2. Procédé selon la revendication 1, caractérisé en ce qu'il consiste à faire pivoter la caméra de 90° autour d'un axe sensiblement horizontal à partir de sa position normale.

3. Procédé selon la revendication 1 ou 2, caractérisé en ce que le gain de chaque ligne est déterminé en fonction du niveau du signal vidéo de la ligne précédente.

4. Procédé selon la revendication 3, caractérisé en ce que le gain précité est déterminé en calculant le gain de chaque ligne de façon qu'il soit inversement proportionnel au niveau du signal vidéo.

5. Procédé selon l'une des revendications 1 à 3, caractérisé en ce qu'il consiste à déterminer le gain de chaque ligne d'une image en fonction du niveau du signal vidéo de la même ligne de l'image précédente.

6. Procédé selon l'une des revendications précédentes, caractérisé en ce qu'il comprend une étape supplémentaire consistant à redresser l'image.

7. Procédé selon la revendication 6, selon lequel l'image est reçue par un écran de visualisation (2), caractérisé en ce qu'il consiste à redresser l'image par pivotement de l'écran de visualisation (2).

8. Procédé selon la revendication 6, caractérisé en ce qu'il consiste à redresser l'image en la numérisant et la redressant à l'aide d'une mémoire adéquate (5).

9. Dispositif pour la mise en oeuvre du procédé tel que défini dans l'une des revendications précédentes, comprenant un émetteur de rayonnement invisible apte à être monté sur le véhicule de manière à éclairer le paysage en avant de celui-ci et une caméra (1) sensible à ce rayonnement et apte à prendre une image de ce paysage, caractérisé en ce qu'il comprend en outre des moyens maintenant la caméra de façon que ses lignes soient sensiblement verticales et un microprocesseur (6) calculant le gain de chaque ligne de l'image et transmettant les gains calculés à la caméra (1) pour diminuer le gain de chaque ligne vidéo surexposée située dans la zone d'éblouissement et augmenter le gain pour chaque ligne vidéo comprise dans la zone d'intérêt.

10. Dispositif selon la revendication 9, caractérisé en ce qu'il comprend des moyens permettant le pivotement de 90° de la caméra (1) autour d'un axe sensiblement horizontal à partir de sa position normale.

11. Dispositif selon la revendication 9 ou 10, caractérisé en ce que l'émetteur précité est du type infrarouge.

12. Dispositif selon l'une des revendications 9 à 11, caractérisé en ce que la caméra (1) précitée est du type CCD.

13. Dispositif selon l'une des revendications 9 à 12, caractérisé en ce qu'il comprend également des moyens pour redresser l'image.

14. Dispositif selon la revendication 13, caractérisé en ce qu'il comprend un écran de visualisation (2) de l'image reçue et les moyens pour redresser l'image sont agencés pour faire pivoter l'écran.

15. Dispositif selon la revendication 13, caractérisé en ce que les moyens pour redresser l'image comprennent un convertisseur analogique-numérique (4) relié à la caméra CCD pour numériser l'image provenant de la caméra (1) ; une mémoire (5) stockant l'image numérisée du convertisseur analogique-numérique (4) sous le contrôle du microprocesseur (6) ; et un contrôleur vidéo (7) commandé par le microprocesseur pour redresser l'image contenue dans la mémoire (5) et la transmettre à un écran de visualisation (2) par l'intermédiaire d'un convertisseur numérique-analogique (8).

## Patentansprüche

1. Verfahren für Nachtsichtverbesserung für Autofahrer, umfassend folgende Stufen, bestehend aus:
a) Belichtung der Landschaft vor dem Fahrzeug mit einer unsichtbaren Strahlung; und
b) Abnahme eines Bildes dieser Landschaft mit einer auf diese Strahlung ansprechende und Zeile für Zeile adressierbare Kamera (1), dadurch gekennzeichnet, daß es außerdem folgende Stufen umfaßt, bestehend aus:
c) Anbringung der Kamera (1) derart, daß die Zeilen deutlich vertikal und jede ihrer Zeilen vollständig in einer Blendzone des Bildes, d. h. im Interessenbereich desselben, sind, und
d) Verringerung der Verstärkung jeder sich in der Blendzone befindende überbelichteten Videozeile, und Erhöhung der Verstärkung jeder sich im Interessenbereich befindende Videozeile.

2. Verfahren gemäß Anspruch 1, dadurch gekennzeichnet, daß es darin besteht, die Kamera um 90° um eine deutlich horizontale Achse aus ihrer normalen Position aus zu schwenken.

3. Verfahren gemäß Anspruch 1 oder 2, dadurch gekennzeichnet, daß die Verstärkung jeder Zeile im Hinblick auf die Impulse des Videosignals der vorangegangenen Zeile bestimmt wird.

4. Verfahren gemäß Anspruch 3, dadurch gekennzeichnet, daß vorgenannte Verstärkung durch Berechnung der Verstärkung jeder Zeile derart berechnet wird, daß sie umgekehrt proportional zum Impuls des Videosignals ist.

5. Verfahren gemäß Anspruch 1 bis 3, dadurch gekennzeichnet, daß es darin besteht, die Verstärkung jeder Zeile eines Bildes im Hinblick auf den Impuls des Videosignals derselben Zeile des vorangegangenen Bildes zu bestimmen.

6. Verfahren gemäß einem der vorherigen Ansprüche, dadurch gekennzeichnet, daß es eine zusätzliche Stufe zum Aufrichten des Bildes umfaßt.

7. Verfahren gemäß Anspruch 6, nach dem das Bild von einem Bildschirm (2) empfangen wird, dadurch gekennzeichnet, daß es darin besteht, das Bild durch Schwenken des Bildschirms (2) aufzurichten.

8. Verfahren gemäß Anspruch 6, dadurch gekennzeichnet, daß es das Bild durch Digitalisieren und durch Aufrichten mittels eines entsprechenden Speichers (5) aufrichtet.

9. Vorrichtung für die Umsetzung des Verfahrens gemäß der Beschreibung aus einem der vorherigen Ansprüche, einen Sender unsichtbarer Strahlungen, der geeignet ist, derart auf dem Fahrzeug aufgebaut zu werden, daß er die Landschaft davor beleuchtet und eine auf diese Strahlung ansprechende Kamera (1) umfassend, die dazu geeignet ist, ein Bild von dieser Landschaft abzunehmen, dadurch gekennzeichnet, daß sie außerdem Mittel, die die Kamera derart halten, daß ihre Zeilen deutlich vertikal sind und einen Mikroprozessor (6) umfaßt, der die Verstärkung jeder Zeile des Bildes berechnet und die berechneten Verstärkungen an die Kamera (1) weiterleitet, um die Verstärkung jeder sich in der Blendzone befindenden überbelichteten Videozeile zu verringern und die Verstärkung jeder sich im Interessenbereich befindenden Videozeile zu erhöhen.

10. Vorrichtung gemäß Anspruch 9, dadurch gekennzeichnet, daß sie Mittel umfaßt, die das Schwenken der Kamera (1) um 90° um eine deutlich horizontale Achse aus ihrer normalen Position heraus erlauben.

11. Vorrichtung gemäß Anspruch 9 oder 10, dadurch gekennzeichnet, daß der vorgenannte Sender von der Art Infrarotsender ist.

12. Vorrichtung gemäß Anspruch 9 bis 11, dadurch gekennzeichnet, daß die vorgenannte Kamera (1) von der Art CCD-Kamera ist.

13. Vorrichtung gemäß Anspruch 9 bis 12, dadurch gekennzeichnet, daß sie ebenfalls Mittel zum Aufrichten des Bildes umfaßt.

14. Vorrichtung gemäß Anspruch 13, dadurch gekennzeichnet, daß sie einen Bildschirm (2) für das empfangene Bild umfaßt und die Mittel zum Aufrichten des Bildes zum Schwenken des Bildschirms angeordnet sind.

15. Vorrichtung gemäß Anspruch 13, dadurch gekennzeichnet, daß die Mittel zum Aufrichten des Bildes einen analogen digitalen Umwandler (4) umfassen, der mit der CCD-Kamera verbunden ist, um das Bild aus der Kamera (1) zu digitalisieren; wobei ein Speicher (5) das digitalisierte Bild des analogen digitalen Umwandlers (4) unter der Kontrolle des Mikroprozessors (6) speichert; und ein vom Mikroprozessor gesteuertes Kontrollvideo (7) zum Aufrichten des im Speicher (5) vorhandenen Bildes und es mittels eines digitalen analogen Umwandlers (8) an einen Bildschirm (2) weiterleitet.

## Claims

1. Method for improving night vision of the driver of an automobile vehicle, comprising the following steps :
a) lightening the landscape in front of the vehicle with an invisible radiation ; and
b) taking an image of this landscape with a camera (1) that is sensitive to this radiation and line-by-line adressable, characterized in that it further comprises the following steps :
c) arranging the camera (1) so that its lines are substantially vertical, and each of its lines are entirely included either in a dazzling area of the image, or in the area of interest thereof, and
d) reducing the gain for each over-exposed video line placed in the dazzling area and increasing the gain for each video line included in the area of interest.

2. Method according to claim 1, characterized in that it consists in making the camera to pivot by 90° about a substantially horizontal axis from its normal position.

3. Method according to claim 1 or 2, characterized in that the gain of each line is determined as a function of the level of the video signal of the preceding line.

4. Method according to claim 3, characterized in that said gain is determined by calculating the gain of each line so that it is inversely proportional to the level of the video signal.

5. Method according to one of claims 1 to 3, characterized in that it consists in determining the gain of each line of an image as a function of the level of the video signal of the same line of the preceding image.

6. Method according to one of the preceding claims, characterized in that it comprises a further step consisting in erecting the image.

7. Method according to claim 6, according to which the image is received on a displaying screen (2), characterized in that it consists in erecting the image by pivoting the displaying screen (2).

8. Method according claim 6, characterized in that it consists in erecting the image by digitalizing it by means of a suitable memory (5).

9. Device for carrying into effect the method such as defined in one of the preceding claims, comprising an emitter of invisible radiation able to be mounted on the vehicle so as to lighten the lanscape in front of it, and a camera (1) that it is sensitive to this radiation and able to take an image of this lanscape, characterized in that it further comprises means for maintaining the camera so that its lines are substantially vertical, and a micro-processor (6) for calculating the gain of each line of the image and transmitting the gains as calculated to the camera (1) for reducing the gain of each over-exposed video line placed in the dazzling area and increasing the gain for each video line included in the area of interest.

10. Device according to claim 9, characterized in that it comprises means for pivoting the camera (1) by 90° about a substantially horizontal axis from its normal position.

11. Device according to claims 9 or 10, characterized in that said emitter is of the infra red type.

12. Device according to one of claims 9 to 11, characterized in that said camera (1) is of the CCD type.

13. Device according to one of claims 9 to 12, characterized in that it also comprises means for erecting the image.

14. Device according to claim 13, characterized in that it comprises a screen (2) for displaying the received image, and the means for erecting the image are arranged for making the screen to pivot.

15. Device according to claim 13, characterized in that the means for erecting the image comprise an analog to digital converter (4) connected to the CCD camera for digitalizing the image coming from the camera (1) ; a memory (5) storing the digitalized image of the analog to digital converter (4) under control of the micro-processor (6) ; and a video controller (7) that is controlled by the micro-processor for erecting the image contained in the memory (5) and transmitting it to a displaying screeen (2) through a digital to analog converter (8)
